Europäisches Patentamt

European Patent Office

Office européen des brevets

(11) Veröffentlichungsnummer: **0 068 105**
A2

(12) # EUROPÄISCHE PATENTANMELDUNG

(21) Anmeldenummer: 82103794.2

(22) Anmeldetag: 04.05.82

(51) Int. Cl.³: **F 23 G 7/00**

(30) Priorität: 27.06.81 DE 3125401
03.10.81 DE 3139409

(43) Veröffentlichungstag der Anmeldung: 05.01.83
Patentblatt 83/1

(84) Benannte Vertragsstaaten: AT BE CH DE FR GB IT LI LU
NL SE

(71) Anmelder: Deutsche Babcock Anlagen
Aktiengesellschaft, Duisburger Strasse 375,
D-4200 Oberhausen 1 (DE)

(72) Erfinder: Wischniewski, Martin, Fabritiusstrase 38,
D-4150 Krefeld 11 (DE)
Erfinder: Dahmen, Hans, Moerser Strasse 409,
D-4150 Krefeld 1 (DE)

(74) Vertreter: Planker, Karl-Josef, Dipl.-Phys., c/o
BABCOCK-BSH AKTIENGESELLSCHAFT
Postfach 4 + 6, D-4150 Krefeld 11 (DE)

(54) Verfahren und Anlage zum Verbrennen eines kohlehaltigen, aschereichen Schlammes.

(57) Der kohlehaltige, aschereiche Schlamm, der durch Naßabscheidung des bei der Kohlevergasung anfallenden Flugstaubes entstanden ist, wird in einem Flugstromtrockner (2) getrocknet. Das Trockengut wird gemahlen und in einer Staubfeuerung (15, 21) verbrannt. Obwohl der Staub wegen seines extrem niedrigen Gehaltes an flüchtigen Bestandteilen und wegen seines hohen Aschegehaltes extrem schwer zündfähig ist, läßt er sich überraschenderweise ohne Zusatzbrennstoff verbrennen. Die mit der gesamten Asche beladenen Rauchgase werden teils zur Trocknung des Schlammes, teils zur Dampferzeugung genutzt. Die hinter dem Dampfkessel (25) abgeschiedene Asche hat einen Restkohlegehalt von weniger als 3% und ist daher als Rohstoff für die Baustoffindustrie verwendbar.

EP 0 068 105 A2

Krefeld, den 7. April 1982
T1 - PL/he - A 81/02/03 EU

Deutsche Babcock
Anlagen Aktiengesellschaft
Duisburger Straße 375

4200 Oberhausen 1

Verfahren und Anlage zum Verbrennen eines kohlehaltigen, aschereichen Schlammes.

Die vorliegende Erfindung betrifft ein Verfahren gemäß dem Oberbegriff des Patentanspruchs 1 und eine Anlage gemäß dem Oberbegriff des Patentanspruchs 3.

Bei der Kohlevergasung nach dem Koppers-Totzek-Verfahren ist der heiße Abgasstrom mit Flugstaub beladen. Dieser wird durch Einspritzen von Wasser niedergeschlagen. Der so gebildete Schlamm wird auf Filtern vorentwässert und dann zunächst in Teichen abgelagert. Nachdem er bis auf erdige Konsistenz heruntergetrocknet ist, wird er auf Halden deponiert. Für eine Vergasungsanlage, bei der der tägliche Flugstaubanfall in der Größenordnung von 1000 Tonnen liegt, bedeutet dies eine erhebliche wirtschaftliche Belastung, ganz zu schweigen von der Verschandelung der Landschaft.

- 2 -

- 2 -

Da der Schlamm einen relativ hohen Kohlegehalt hat -
ca. 45% der Trockensubstanz - , liegt es an sich nahe,
ihn als Brennstoff zu nutzen.

Nach einem Aufsatz in der Zeitschrift "Aufbereitungstechnik"
Nr. 10/1977, Seiten 543 - 548, ist ein Brennstoff mit hohem
Wasser- und Aschegehalt besonders gut für die Verbrennung
in der Wirbelschicht geeignet. In dem Aufsatz wird über die
erfolgreiche Verbrennung von Flotationsbergen berichtet,
bei denen sowohl der Aschegehalt als auch der Wassergehalt
über 50 % lag. Insoweit besteht zwischen diesen Flotationsbergen und den Schlämmen aus der Kohlevergasung Übereinstimmung. Wenn man aber den Gedanken, die Schlämme der Kohlevergasung in der Wirbelschicht zu verbrennen, weiter verfolgt, stößt man auf große Schwierigkeiten. Diese ergeben
sich aus zwei speziellen Eigenschaften des Flugstaubes:
er ist extrem arm an flüchtigen Bestandteilen und wesentlich
feinkörniger als der übliche Flotationsschlamm. Aufgrund des
Kornspektrums würde sich bei einer Wirbelschichtfeuerung eine
sehr niedrige Luftgeschwindigkeit ergeben. Diese wiederum
bedingt eine Vergrößerung der Reaktorfläche in einem wirtschaftlich nicht mehr tragbaren Ausmaß. Selbst wenn man diese
Vergrößerung in Kauf nähme, würde das Ergebnis nicht befriedigen. Denn infolge der schlechten Zündfähigkeit - bedingt
durch den geringen Gehalt an flüchtigen Bestandteilen -
läßt sich nur ein schlechter Ausbrand erzielen. Der Ausbrand
in der Wirbelschicht wird auch durch den hohen Wasseranteil
des Schlammes beeinträchtigt. Denn ein erheblicher Teil der
ohnehin schon geringen Verweilzeit in der Wirbelschicht würde
für die Trocknung benötigt und daher für die Verbrennung
verloren gehen. Schlechter Ausbrand ist gleichbedeutend
mit hohem Kohlenstoffanteil in der Asche. Eine Asche mit
einem Kohlenstoffanteil von mehr als etwa 5 % ist aber für
die Verwendung als Rohmaterial für Baustoffe nicht geeignet
und müßte daher in Ermangelung anderer Anwendungsmöglichkeiten wieder deponiert werden.

- 3 -

Daher würde man auf diesem kostspieligen Wege das Deponie-Problem nur etwas verkleinern, aber nicht lösen. Ein weiterer Nachteil des schlechten Ausbrandes ist natürlich eine geringe Wärmeausbeute.

Durch die DE - OS 27 08 228, von der der Oberbegriff des Anspruchs 1 ausgeht, ist ein Verfahren zur Verbrennung von Kohlengrubenabfällen bekannt, die offenbar den Flotationsschlämmen entsprechen. Bei diesem Verfahren wird der Schlamm zunächst in einer Wirbelschicht getrocknet. Ein Teil des Trockenstoffes wird einer Verbrennungswirbelschicht zugeführt, die unter der Trocknungswirbelschicht angeordnet ist, so daß diese direkt von den Rauchgasen beaufschlagt wird. Der restliche Trockenstoff wird in einer nicht näher beschriebenen Feuerung zur Energiegewinnung verbrannt. Das Verfahren vermeidet zwar die Belastung der Feuerungen durch den Wassergehalt der Schlämme. Die anderen oben geschilderten Probleme würden aber unvermindert bestehen, wenn man dieses Verfahren zur Verbrennung der Schlämme aus der Kohlevergasung anwenden wollte. Dabei müßte auch die Trocknungswirbelschicht wegen der Feinkörnigkeit des Materials mit extrem niedriger Gasgeschwindigkeit betrieben werden. Sie müßte daher riesige Ausmaße annehmen. Ausserdem wären für das Trocknerabgas umfangreiche Entstaubungseinrichtungen erforderlich.

Der Erfinder hat daher einen anderen Weg eingeschlagen und versucht, den Schlamm in einer Staubfeuerung zu verbrennen. Diese Versuche verliefen allerdings zunächst wenig ermutigend. Selbst bei Verwendung eines öl- oder gasgefeuerten Stützbrenners war der Ausbrand schlecht. Daher war auch die Wärmeausbeute schlecht und der Kohlegehalt der Asche für ihre Verwendung in der Baustoffindustrie zu hoch. Insofern war ein Vorteil gegenüber der Wirbelschichttechnik nicht erkennbar.

Das schlechte Ergebnis ist nicht verwunderlich. Denn wie man z.B. aus der Zeitschrift "Chemie-Ingenieurtechnik 50 (1978) Nr. 9, Seiten 662 - 669 entnehmen kann, ist die Staubfeuerung -

zwar problemlos, wenn die zu verfeuernde Kohle wenig Ballaststoffe enthält. Die Probleme der Staubfeuerung wachsen mit zunehmendem Asche-, Wasser- und Salzgehalt des Brennstoffs. Aus der neueren Patentliteratur, z.B. aus der DE-AS 27 29 476 und der DE-OS 28 16 768, geht hervor, daß schon bei Brennstoffen mit einem Aschegehalt von 15 % und einem Gehalt an flüchtigen Bestandteilen von 8 - 12 %, wie Anthrazit oder Magerkohle, die selbstgängige Verbrennung in einer Staubfeuerung problematisch ist. Für die Feuchtigkeit wird dabei eine obere zulässige Grenze von 2 % angegeben. Bei einem Schlamm, der aus einer Kohlevergasungsanlage stammte, wurden aber erheblich ungünstigere Werte gemessen: der Gehalt an flüchtigen Bestandteilen lag unter 1 %, der Aschegehalt und der Feuchtegehalt je über 50 %.

In der Zeitschrift "Zement-Kalk-Gips", Jahrgang 32 (1979), Heft 8, Seiten 386-389, sind Drehofenbrenner für verschiedene Brennstoffe und Brennstoffgemische beschrieben, mit denen u.a. auch feste, staubförmige Brennstoffe eingesetzt werden, darunter auch solche, deren Anteil an flüchtigen Bestandteilen bei wenigen Prozent liegt, oder solche mit einem Aschegehalt von bis zu 60 % oder sogar darüber. Bei einem Beispiel ist ein Feuchtegehalt von 9 % angegeben. Dieser Veröffentlichung ist aber zu entnehmen, daß bei besonders geringwertigen festen Brennstoffen eine gas- oder ölgefeuerte Stützflamme vorgesehen ist. Es kann kein Zweifel bestehen, daß der Schlamm aus der Kohlevergasung, bei dem sowohl der Anteil an flüchtigen Bestandteilen als auch der Aschegehalt als auch der Wassergehalt extrem ungünstige Werte haben, in diesem Sinne als besonders geringwertiger Brennstoff anzusehen ist. Daher konnte auch diese Veröffentlichung dem Fachmann, der sich die unten angegebene Aufgabe stellte, keine erfolgversprechende Anregung geben.

Die der Erfindung zugrundeliegende Aufgabe besteht darin, ein Verfahren der im Oberbegriff des Anspruchs 1 angegebenen Gattung zu schaffen, das im stationären Betrieb ohne Zusatzbrennstoff arbeitet und einen so hohen Ausbrand ermöglicht, daß die Wärmeausbeute hoch und die Asche als Rohstoff für die Bauindustrie geeignet ist. Eine zweite Aufgabe besteht darin, eine Anlage zur Durchführung des Verfahrens zu schaffen.

Die erste Aufgabe wird erfindungsgemäß durch die im Kennzeichen des Anspruchs 1 angegebenen Merkmale gelöst.

Obwohl das Primärkorn schon sehr fein ist, wird gemäß Anspruch 2 empfohlen, das Trockengut vor dem Einbringen in die Feuerung zu mahlen. Dabei werden nicht nur die durch Zusammenballungen des Primärkorns entstandenen Granalien zerstört, sondern die Kornfeinheit wird im Vergleich zum ursprünglichen Primärkorn noch gesteigert. Ein hervorragender Ausbrand wird erreicht, wenn das Korn so fein ist, daß praktisch die gesamte Asche mit den Rauchgasen aus der Feuerung ausgetragen wird. Auf diese Weise wird auch die fühlbare Wärme der Asche für die Trocknung bzw. Energiegewinnung nutzbar gemacht.

Die zweite Aufgabe wird durch die Merkmale des Anspruchs 3 gelöst. Die Ansprüche 4 - 7 betreffen vorteilhafte Ausgestaltungen der Anlage gemäß Anspruch 3.

Die Zeichnung dient zur Erläuterung der Erfindung anhand eines schematisch dargestellten Ausführungsbeispiels.

Fig. 1 zeigt eine vollständige Anlage gemäß der Erfindung,
Fig. 2 zeigt teilweise eine abgewandelte Anlage.

Der mechanisch auf einen Wassergehalt von etwa 54 - 60 % vorentwässerte Schlamm wird über die Naßgutaufgabe 1 kontinuierlich in den Flugstromtrockner 2 eingespeist. Im Flugstromtrockner wird das anfangs klumpige Material weitgehend dispergiert. In der Umlenkhaube 3 des Flugstromtrockners 2 wird in bekannter Weise die noch nicht durchgetrocknete Grobfraktion von der feineren Fraktion abgetrennt und über das Rohr 4 wieder in den Flugstromtrockner 2 zurückgeführt. Das auf weniger als 1 % Restfeuchte getrocknete, granulatartige Feingut gelangt mit dem Fördergas zum Zyklonabscheider 5. Von dort wird das Fördergas zu einem Schlauchfilter 6 abgeführt. Das gereinigte Gas wird teilweise, wie weiter unten erwähnt, in die Feuerung des Trockners zurückgeführt, teilweise mit einer Temperatur von 110 - 130° C in die Atmosphäre ausgestoßen. Das im Zyklonabscheider 5 abgeschiedene Gut wird einem Sichter 7 zugeführt. Der Grobanteil aus dem Sichter 7 wird anschließend in einer Rohrmühle 8 gemahlen. Das Mahlgut wird über ein Becherwerk 9 in den Sichter 7 zurückgeführt. Die Abluft des Sichters 7 und der Rohrmühle 8 wird in einem Schlauchfilter 10 entstaubt und von dort in die Atmosphäre entlassen. Das Feingut aus dem Sichter 7 wird zusammen mit dem Staub, der in den beiden Schlauchfiltern 6, 10 angefallen ist, über eine pneumatische Förderstrecke 11 in die beiden Bunker 12, 13 gefüllt.

Von dem Bunker 12 wird mit einer Dosiereinrichtung 14 das getrocknete und feingemahlene Gut einer Feuerung 15 zugeführt. Die Feuerung 15 ist z.B. mit einem an sich bekannten Brenner gemäß der oben genannten Literaturstelle aus "Zement-Kalk-Gips" ausgerüstet. Die Feuerung 15 wird durch einen Ventilator 16 mit Primärluft versorgt. Außerdem wird über eine Rohrleitung 17, die hinter dem Filter 6 von der Abgasleitung des Flugstromtrockners 2 abgezweigt ist, ein Teil der Brüden des Flugstromtrockners 2 in die Feuerung 15 zurückgeführt. Die Feuerung 15 ist mit einem gasbetriebenen Zündbrenner 18 versehen, der nur beim Anfahren in Betrieb ist. Im stationären Betrieb arbeitet die Feuerung ohne Zusatzbrennstoff. Das gesamte Rauchgas der Feuerung 15 wird über den Stutzen 19 dem Flugstromtrockner 2 als Trocknungsmedium zugeführt. Die Temperatur des Rauchgases beim Eintritt in den Flugstromtrockner 2 liegt bei etwa 700 Grad. Die gesamte Asche wird als Flugasche mit dem Rauchgas abgeführt und vermischt sich im Flugstromtrockner 2 mit dem Rohgut. Dadurch wird der Aschegehalt, der nach den üblichen Maßstäben ohnehin schon extrem hoch ist, sogar noch weiter erhöht.

Von dem Bunker 13 wird mit einer Dosiereinrichtung 20 das Trockengut einer Staubfeuerung 21 zugeführt. Diese entspricht in ihrer Bauart der Feuerung 15, ist aber für eine wesentlich höhere Leistung ausgelegt. Sie hat ebenso wie die Feuerung 15 einen Primärluftanschluß 22 und einen Zündbrenner 23, ferner einen der Rohrleitung 17 bei der Feuerung 15 entsprechenden Anschluß (24) für die Zufuhr von Sekundärluft. Das Rauchgas der Feuerung 21 gelangt mit einer Temperatur von 1100 bis 1200° C zu einem Kessel 25. Die gesamte Asche wird als Flugasche mitgeführt. Das auf etwa 200°C abgekühlte Gas wird in einem Filter 26 von der mitgeführten Asche befreit und in die Atmosphäre ausgestoßen. Die Asche aus dem Filter 26 wird zusammen mit der im Kessel 25 abgeschiedenen Asche pneumatisch zu einem Aschesilo 27 gefördert. Sie enthält weniger als 3 % Restkohle und ist daher als Rohstoff für die Herstellung von Bausteinen, Zuschlagstoffen und dergleichen geeignet.

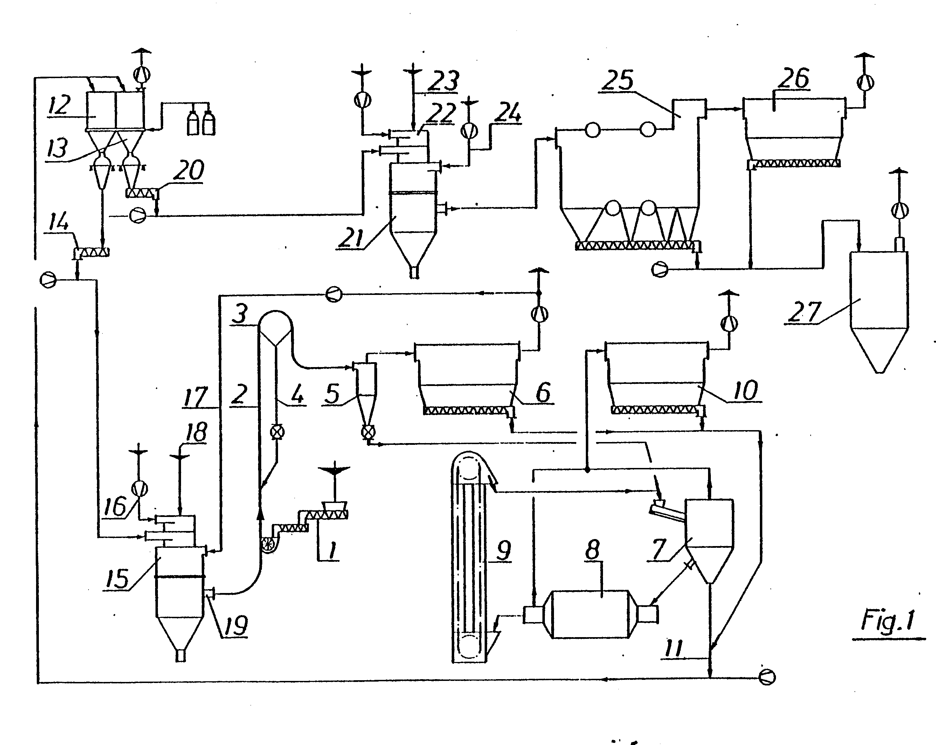

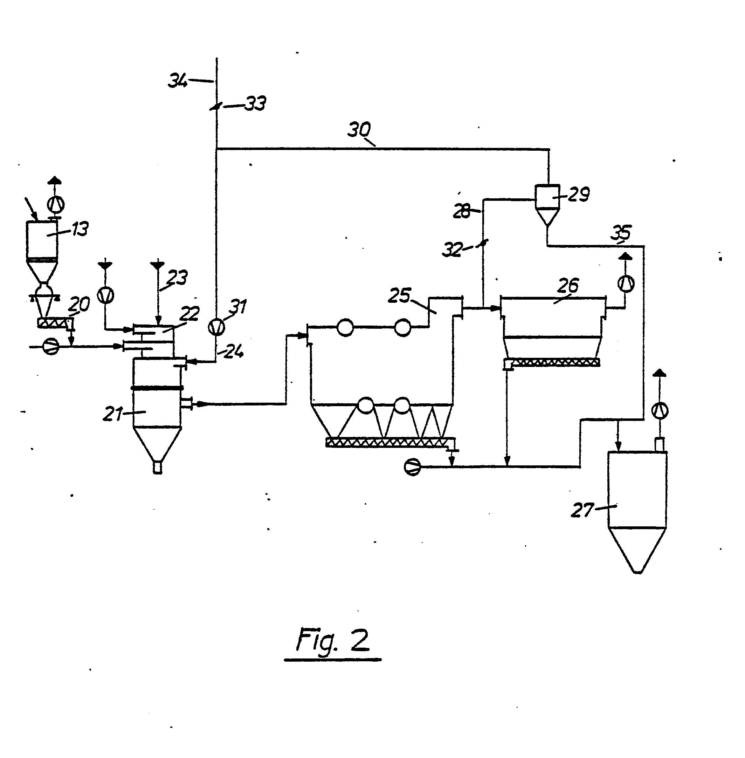

Das Ausführungsbeispiel gemäß Fig. 2 unterscheidet sich von dem der Fig. 1 im wesentlichen durch eine vom Rauchgasaustritt des Kessels 25 abzweigende Leitung 28, die in einen Zyklon 29 mündet, und eine von dem Zyklon 29 ausgehende Leitung 30, die zum Anschluß 24 der Feuerung 21 zurückgeführt ist. Der gesamte Trocknungsteil der Anlage stimmt mit dem entsprechenden Teil der in Fig. 1 gezeichneten Anlage überein. Daher wurde dieser Teil, der in Fig. 1 die untere Hälfte der Zeichnung einnimmt, in Fig. 2 der Einfachheit halber nicht gezeichnet.

Bei der Anlage gemäß Fig. 2 wird das Abgas des Kessels 25 in zwei Teilströme aufgeteilt. Der eine Teilstrom wird - wie bei Fig. 1 - in einem Filter 26 von der mitgeführten Asche befreit und in die Atmosphäre ausgestoßen. Der andere, über die Leitung 28 abgezweigte Teilstrom wird in dem Zyklon 29 vom Grobstaub befreit und über die Leitung 30 mittels eines Ventilators 31 in die Feuerung 21 eingeblasen.

- 8 -

Die Leitung 28 ist mit einer Regelklappe 32 ausgestattet, die eine Beeinflussung der rückgeführten Abgasmenge ermöglicht. In die Leitung 30 mündet eine mit einer Regelklappe 33 versehene Leitung 34, die zum Ansaugen von Umgebungsluft beim Anfahren der Anlage dient.

Von dem Zyklon 29 ist eine pneumatische Förderleitung 35 zu dem Aschesilo 27 geführt.

Für die Anlage gemäß Fig. 1 und die Anlage gemäß Fig. 2 wurde je ein Beispiel durchgerechnet.

Die beiden Beispiele stimmen in den folgenden Betriebsparametern überein:

| | |
|---|---|
| Brennstoffdurchsatz: | 18 236 kg/h |
| Kohlegehalt des Brennstoffs | 38,15 % |
| Verbrennungsluftdurchsatz | 97 440 kg/h |
| Temperatur der Verbrennungsluft | 20° C |
| Verbrennungstemperatur | 1 810° C |
| Rauchgastemperatur am Eingang des Kessels | 1 100° C |

Die beiden Beispiele unterscheiden sich durch die folgenden Betriebsparameter

| | Fig. 1 | Fig. 2 |
|---|---|---|
| Zusatzluft bzw. rückgeführtes Abgas | 79 452 kg/h | 89 067 kg/h |
| Rauchgasmenge | 183 902 kg/h | 193.021 kg/h |
| Abgasmenge am Schornstein | 183 902 kg/h | 103 954 kg/h |

Man erkennt, daß in beiden Fällen eine beachtliche Rauchgasmenge für die Dampferzeugung zur Verfügung steht. Die Anlage

- 9 -

- 9 -

gemäß Fig. 2 ist zwar geringfügig teurer als die in Fig. 1 dargestellte Anlage. Dafür liefert sie eine rund 5 % höhere Rauchgasmenge, wobei die Menge des ungenutzt ausgestoßenen Abgases um mehr als 40 % niedriger liegt.

- - -

Patentansprüche:

- 10 -

- 10 -  Krefeld, den 7. April 1982
T1 - PL/he - A 81/02/03 EU

Deutsche Babcock
Anlagen Aktiengesellschaft
Duisburger Straße 375

4200 Oberhausen 1

Patentansprüche:

1. Verfahren zum Verbrennen eines kohlehaltigen, aschereichen
Schlammes, wobei der Schlamm getrocknet und das Trockengut verbrannt wird und wobei die Rauchgase teils für die
Trocknung und teils zur Energiegewinnung verwendet werden,
dadurch gekennzeichnet, daß der Abfallschlamm der Kohlevergasung im Flugstrom getrocknet wird und daß das Trockengut im Flug verbrannt wird.

2. Verfahren nach Anspruch 1, dadurch gekennzeichnet, daß der
Trockenstoff gemahlen wird und daß die mit praktisch der
gesamten bei der Verbrennung anfallenden Asche beladenen
Rauchgase für die Trockung bzw. zur Energiegewinnung verwendet werden.

3. Anlage zum Verbrennen eines kohlehaltigen, aschereichen
Schlammes nach dem Verfahren gemäß Anspruch 1 oder 2, mit
mindestens einer Feuerung, mit einem von den Rauchgasen
der Feuerung beaufschlagten Trockner und mit einer Energiegewinnungsanlage, dadurch gekennzeichnet, daß der Trockner
ein Flugstromtrockner (2) ist und daß die Feuerung eine
Staubfeuerung (15, 21) ist.

4. Anlage nach Anspruch 3, dadurch gekennzeichnet, daß in
den Weg des Trockengutes zwischen Flugstromtrockner (2)
und Feuerung (15, 21) eine Mühle (8) zwischengeschaltet
ist.

5. Anlage nach Anspruch 3 oder 4, gekennzeichnet durch einen
zwischen Mühle (8) und Feuerung (15, 21) zwischengeschalteten Speicher (12, 13).

- 11 -

6. Anlage nach einem der Ansprüche 3 - 5, dadurch gekennzeichnet, daß für den Flugstromtrockner (2) und die Energieerzeugungsanlage (Dampfkessel 25) separate Feuerungen (15, 21) vorgesehen sind.

7. Anlage nach Anspruch 6, gekennzeichnet durch eine von dem Dampfkessel (25) in die Staubfeuerung (21) des Dampfkessels (25) zurückgeführte Abgasleitung ( 28, 30)

- - -

Fig.1

0068105

_Fig. 2_